# FASCICULE DE BREVET EUROPEEN

(11) **EP 1 722 627 B1**
(45) Date de publication et mention de la délivrance du brevet: **21.01.2009**
(21) Numéro de dépôt: 05736514.0
(22) Date de dépôt: 09.03.2005
(51) Int. Cl.: A01L 1/02

(54) **FERRURE MECANIQUE POUR SABOT, NOTAMMENT POUR CHEVAL DE SPORT**
MECHANISCHER BESCHLAG FÜR HUFE, DER INSBESONDERE FÜR SPORTPFERDE BESTIMMT IST
MECHANICAL SHOEING FOR HOOF, WHICH IS INTENDED, IN PARTICULAR, FOR SPORT HORSES

(30) Priorité: 09.03.2004 FR 0402429
(43) Date de publication de la demande: 22.11.2006
(73) Titulaire: Vaillant, Joseph, 74300 Cluses (FR)
(72) Inventeur: Vaillant, Joseph, 74300 Cluses (FR)
(74) Mandataire: Poncet, Jean-François
(86) Numéro de dépôt international: PCT/FR2005/000567
(87) Numéro de publication internationale: WO 2005/086998

(56) Documents cités:
- WO-A-99/40782
- DE-A- 3 517 514
- DE-A- 4 445 938
- DE-C- 13 888
- FR-A- 2 526 630
- US-A- 5 740 866

## Description

La présente invention concerne une ferrure mécanique destinée à être montée sur le sabot d'un équidé en général, mais plus particulièrement d'un cheval de sport.

En effet, les pieds des chevaux de sport ferrés sont généralement soumis à de très fortes sollicitations dues au poids des fers et aux différentes surcharges dues au manque de mobilité du pied ferré, provoquant de graves lésions musculaires, tendineuses et articulaires :
- surcharges dues à l'allongement du bras de levier dans la phase du départ du pied,
- surcharges des talons dans la phase du poser du pied et de l'amortissement,
- surcharges dues au déplacement malaisé dans la phase du déplacement latéral en tournant, en raison des duretés de pistes de plus en plus prononcées.

On trouve dans l'art antérieur quelques solutions qui proposent de résoudre isolément l'un ou l'autre des problèmes énoncés en omettant de résoudre les autres, qui ne sont pas les moindres bien souvent

Ceci provoque à long terme des soucis d'équilibre général du pied. Il s'ensuit naturellement des problèmes de boiterie, et une carrière sportive fortement réduite pour l'équidé.

On connait aussi, du document DE 35 17 514 A1, une ferrure conforme au préamble de la revendication 1, d₂ dans laquelle la partie centrale avant présente une épaisseur accrue et une remontée supérieure d'encastrement du bord antérieur de sabot. Une telle structure donne à la partie centrale avant une rigidité accrue.

L'invention a donc pour but de résoudre l'ensemble des problèmes précités, ne nécessitant pas de transformation majeure de la part du maréchal ferrant, en dehors de la mise en forme pour le pied concerné, afin d'associer dans un même produit standard la performance tout en améliorant le confort, la protection et la mobilité du pied ferré.

A cet effet, l'invention concerne une ferrure mécanique telle que définie par la revendication 1, et destinée à être montée plus particulièrement sur le sabot d'un cheval de sport, du type formée par une partie centrale avant ou pince, de part et d'autre de laquelle s'étendent librement deux branches latérales ou quartiers, dont les parties d'extrémité arrières forment des talons, des lumières ou étampures étant réalisées sur lesdites branches latérales, afin de recevoir des clous de fixation sur le sabot. Vue en plan, la ferrure présente sur sa face interne dirigée vers le sabot, au niveau de chacune de ses branches latérales des zones des parties d'extrémité arrières où talons, formant des épanouissements de plus grande largeur que les branches latérales. Elle présente également , vue en plan, sur la face interne, au niveau de chacune de ses branches latérales, une zone dont la ligne intérieure présente un profil de ligne courbe simple et dont la largeur, obtenue par un rétrécissement en largeur, est moindre par rapport à la zone de la partie centrale avant ou pince, de plus grande largeur.

Une ferrure ainsi obtenue rentre dans la famille des ferrures traditionnellement connues sur le marché et peut se monter en lieu et place de celles-ci, qu'elles soient métalliques ou en matière synthétique, obtenue par forgeage, usinage ou moulage de matière solide, liquide ou pulvérulente.

Cette description donnée à titre d'exemple non limitatif, fera mieux comprendre comment l'invention peut être réalisée, en référence aux dessins annexés sur lesquels :

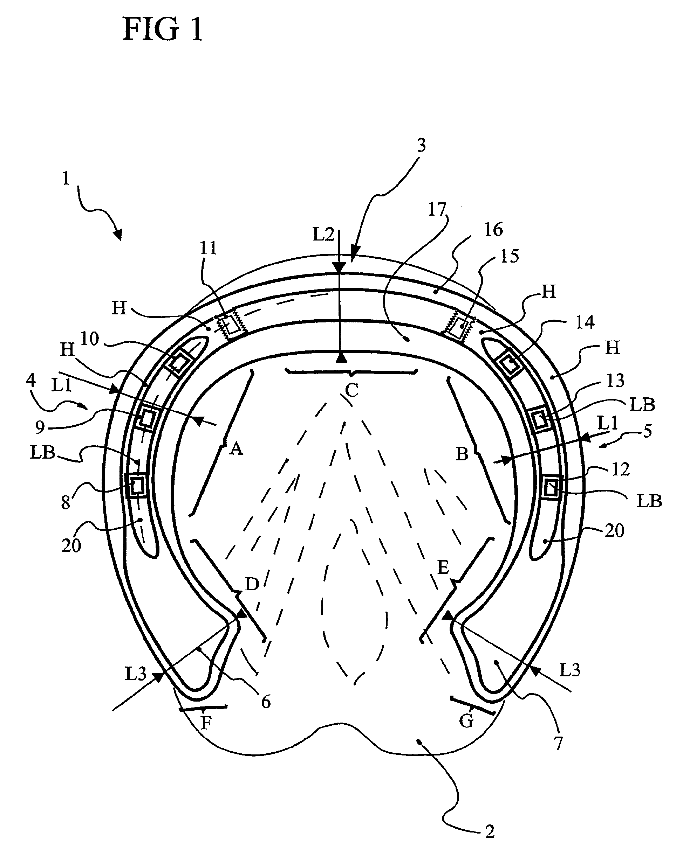

La figure 1 représente une ferrure mécanique selon l'invention, vue en plan, avec la matérialisation du sabot du cheval.
La figure 2 est une vue en perspective de la face externe de la ferrure selon la figure 1, destinée à être en contact avec le sol.
La figure 3 est une vue en perspective de la face interne de la ferrure selon la figure 1, destinée à être en contact avec le sabot du cheval.

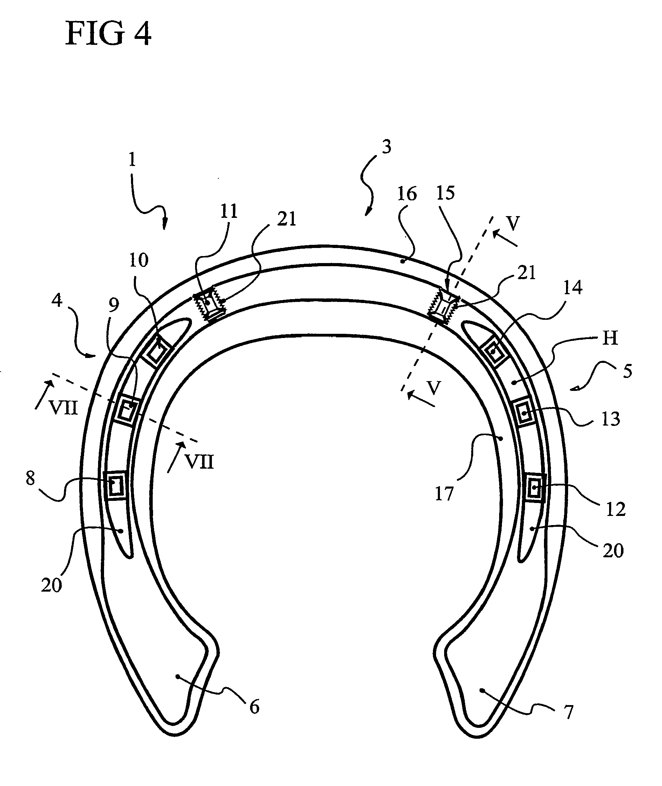

La figure 4 est une vue en plan de la face extérieure de la ferrure, selon la figure 1, représentée seule, avant sa mise en place.
La figure 5 est une vue en coupe transversale à échelle agrandie de la ferrure selon la ligne V.V de la figure 4.
La figure 6 est une vue de dessus à échelle agrandie, d'une étampure transversale.
La figure 7 est une vue en coupe à échelle agrandie selon la ligne VII.VII de la figure 4.
Les figures 8 et 8a sont respectivement une vue en plan et en perspective d'une variante d'une ferrure selon la figure 1.
La figure 9 est également une vue en plan d'une autre variante d'une ferrure selon la figure 1.

La ferrure mécanique (1) désignée globalement sur les figures est destinée à être montée, afin de protéger la partie d'un sabot (2) qui lui fait face, nommée sole, qui constitue en fait des parties sensibles et fragiles.

La ferrure (1) est formée par une partie centrale avant (3) ou pince de part et d'autre de laquelle s'étendent librement deux parties latérales (4) et (5) ou quartiers, dont les parties d'extrémité arrières (6) et (7) forment les talons.

Des lumières (8, 9, 10, 11) et (12, 13, 14, 15) ou étampures sont réalisées sur lesdits quartiers (4) et (5) afin de recevoir les clous de fixation (non représentés) sur le sabot (2). Ces étampures pouvant être situées dans une rainure courbe (20).

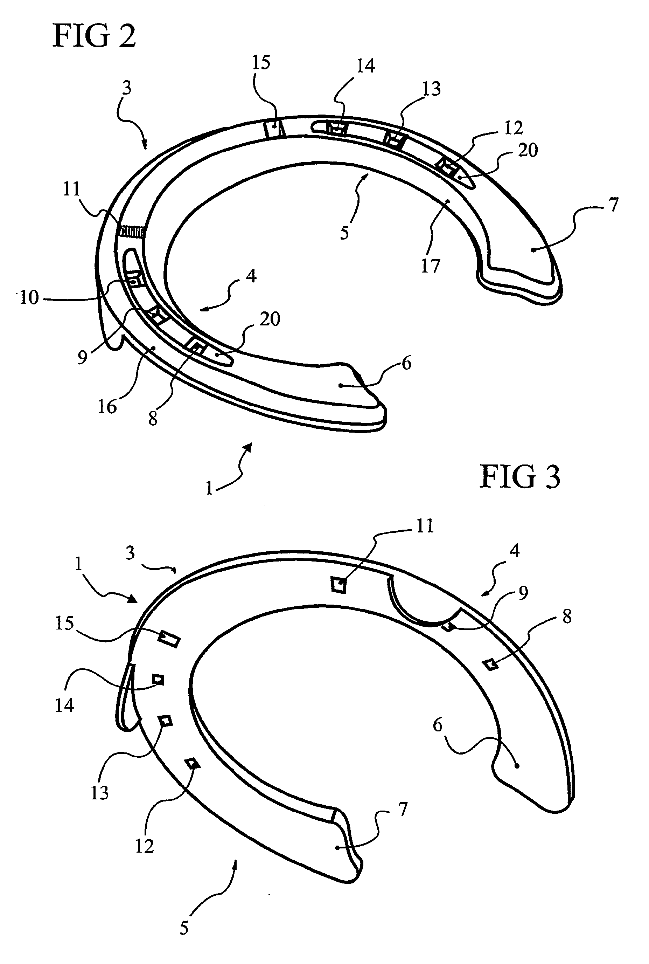

Selon l'invention, la ferrure (1) vue en plan présente sur sa face interne (figure 3) dirigée vers le sabot (2), au niveau de chacune de ses branches latérales ou quartiers (4) et (5), une zone (A, B) de moindre largeur, obtenue par un rétrécissement en largeur par rapport à la zone C de la partie centrale avant ou pince de plus grande largeur et par rapport aux zones D et E des parties d'extrémité arrières (6) et (7) ou talons, formant des épanouissements de plus grande largeur également que les quartiers (4, 5). Ainsi, la largeur (L1) des zones centrale (A, B) des branches latérales (4, 5) est inférieure à la largeur (L2) de la partie centrale avant (3) et inférieure à la largeur (L3) des parties d'extrémité (6, 7).

Comme on peut également le remarquer sur les figures, les parties d'extrémité (6, 7) ou talons présentent après leur zone d'épanouissement (D, E), de nouvelles zones d'amincissement (F, G) réalisées vers les bords périphériques externes desdits talons (6) et (7).

Selon un mode de réalisation de l'invention, les bords périphériques interne et externe de la ferrure (1) sont biseautés par des chanfreins (16) et (17) réalisés en direction de sa face externe (figure 2), de manière à définir, vue en plan, une face de contact H avec le sol, de largeur plus étroite que la face interne (figure 3) de ladite ferrure (1), mais sensiblement constante, au niveau de la pince 3 et des deux quartiers (4) et (5) la prolongeant, ladite face de contact H s'élargissant au niveau des talons (6) et (7).

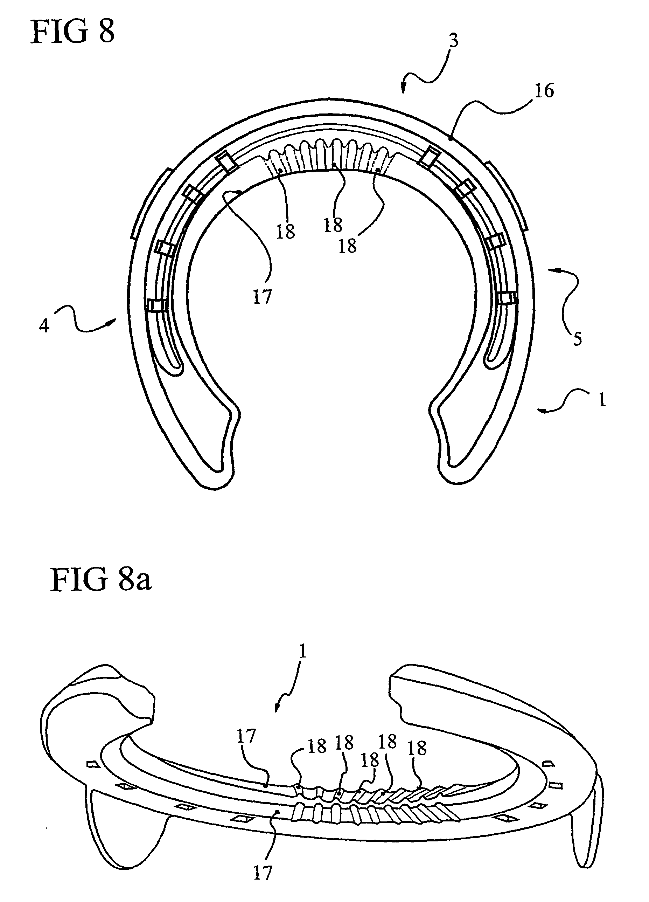

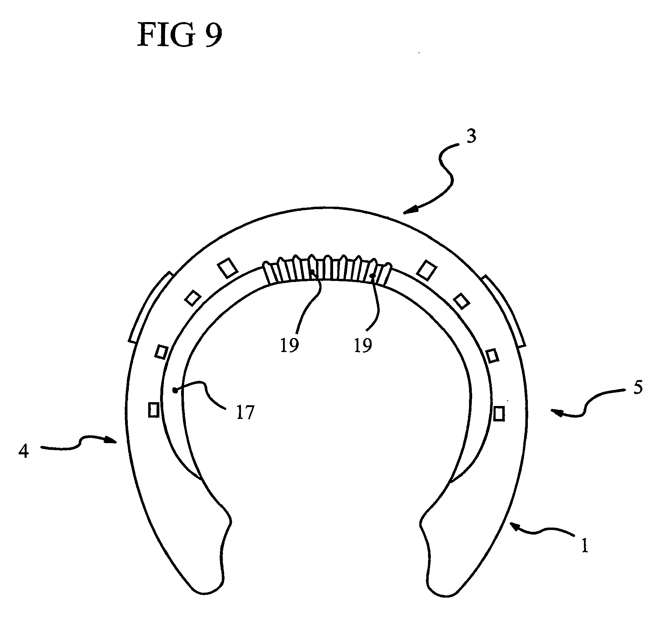

Selon l'invention, la partie centrale avant (3) ou pince présente une pluralité de plis (18) formant accordéon ou de rainures (19) disposées sur le chanfrein interne (17). Ces plis (18) (figures 8-8a) ou rainures (19) (figure 9) favorisent la flexion latérale de la ferrure selon l'invention, c'est-à-dire augmentent l'écartement et le rapprochement mutuel entre les deux branches latérales (4 et 5) sous un effort donné, jusqu'à 25% par rapport à des ferrures classiques. Cette augmentation sera particulièrement recherchée dans certains mouvements du pied du cheval par exemple en déplacement latéral en tournant. De préférence, ces plis (18) ou rainures (19) seront fabriqués par estampage concomitamment avec la ferrure selon l'invention.
Une telle ferrure prédispose sa pose avec un encastrement maximum vers l'arrière du pied. Un autre avantage d'une ferrure ainsi constituée tient au fait que les branches latérales (4) et (5) ayant une surface d'appui au sol réduite, cela facilitera la pénétration dans le sol dans la phase de déplacement latéral en tournant. Ceci est obtenu à la fois par la diminution de largeur évoquée précédemment, et au biseautage interne et externe du profil.

En ce qui concerne les talons (6) et (7), présentant des épanouissements selon l'invention, il est préférable que cette zone soit exempte de rainures afin de permettre le perçage et le taraudage ultérieur sans difficulté, afin de permettre l'utilisation de crampons vissés, utilisés lors des épreuves de concours de sauts d'obstacles.

Par ailleurs, les zones d'amincissement (F, G) réalisées dans le prolongement des zones d'épanouissement (D, E) des talons (6) et (7), présentent l'avantage de faciliter le passage du fer de part et d'autre d'une partie proéminente du sabot dans cette zone, nommée la fourchette, et contribuent également à l'allégement du produit, au même titre que les biseautages et la variation de largeur du profil.

Selon l'invention, la face externe de chacune des branches latérales (4, 5) présente dans sa face plane une pluralité de lumières ou étampures (8) à (11) et (12) à (15) destinée à recevoir les clous. Ces étampures sont avantageusement, mais non exclusivement disposées dans une rainure courbe (20).

Comme on peut le remarquer sur l'ensemble des figures et selon une autre caractéristique de l'invention, la ferrure (1) comporte de part et d'autre de la pince (3), dans des zones limitrophes avec les branches latérales (4, 5), des étampures (11, 15) s'étendant transversalement dans une zone médiane et dont la longueur est plus importante que l'épaisseur de la lame du clou correspondant, de manière à positionner celui-ci dans une zone idéale de clouage, à savoir sur la ligne blanche (LB) du sabot (2).

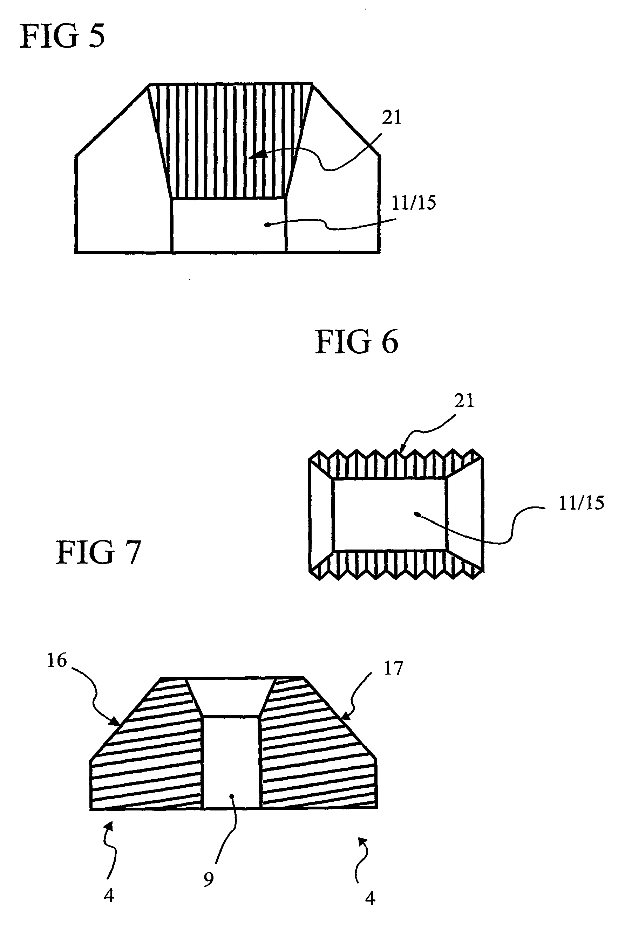

Comme le montre particulièrement bien la figure 5, chacune des étampures transversales (11, 15) est par exemple de forme tronc-pyramidale évasée vers la face externe de la pince (3).

Selon une autre caractéristique de l'invention représentée sur les figures, mais plus particulièrement sur les figures 5 et 6, les faces internes des étampures transversales tronc-pyramidales (11) et (15) comportent des crans (21), afin de permettre le blocage de la tête du clou quelle que soit sa position dans l'étampure.

On ajoutera que la ferrure de l'invention prédispose sa pose avec un encastrement maximum vers l'arrière du pied (nommée ferrure à pince tronquée). La modification de la forme du fer dans cette zone par une forme aplatie en pince facilitera cet engagement vers l'arrière du pied. Afin de garder la possibilité de positionner le clou dans la zone idéale de clouage, à savoir la ligne blanche du sabot, la zone poinçonnée destinée à recevoir le clou, c'est-à-dire l'étampure, pourrait avoir cette forme transversale (pour positionner au mieux dans la ligne blanche) et crantée, afin de permettre un blocage de la tête du clou dans le sens radial.

Bien entendu, l'invention n'est pas limitée aux modes de réalisation décrits et représentés à titre d'exemples, mais elle comprend aussi tous les équivalents techniques ainsi que leurs combinaisons, tels que définis par les revendication suivantes.

## Revendications

1. Ferrure mécanique destinée à être montée plus particulièrement sur le sabot d'un cheval de sport, du type formée par une partie centrale avant (3) ou pince, de part et d'autre de laquelle s'étendent librement deux branches latérales (4 et 5) ou quartiers, dont les parties d'extrémité arrières (6 et 7) forment des talons, des lumières (8, 9, 10, 11 et 12, 13, 14, 15) ou étampures étant réalisées sur lesdites branches latérales (4 et 5), afin de recevoir des clous de fixation sur le sabot (2), ferrure qui, vue en plan, présente sur sa face interne dirigée vers le sabot (2), au niveau de chacune de ses branches latérales (4 et 5), des zones (D et E) des parties d'extrémité arrières (6, 7) ou talons, formant des épanouissements de plus grande largeur que les branches latérales (4, 5), la ferrure présentant également, vue en plan, sur la face interne, au niveau de chacune de ses branches latérales (4 et 5), une zone (A, B) dont la ligne intérieure présente un profil de ligne courbe simple et dont la largeur, obtenue par un rétrécissement en largeur, est moindre par rapport à la zone (C) de la partie centrale avant (3) ou pince, de plus grande largeur, le bord périphérique interne de la ferrure étant biseauté par un chanfrein (17) réalisé en direction de sa face externe, de manière à définir, vue en plan, une face de contact (H) avec le sol, de largeur plus étroite que la face interne de ladite ferrure (1), ladite face de contact (H) s'élargissant au niveau des talons (6 et 7), **caractérisée en ce que** la partie centrale avant (3) ou pince présente une pluralité de plis (18) formant accordéon ou de rainures (19) disposées sur le chanfrein interne (17).

2. Ferrure selon la revendication 1, **caractérisée en ce que** ses parties d'extrémité (6, 7) ou talons présentent, dans le prolongement de leur zone d'épanouissement (D, E), de nouvelles zones d'amincissement (F, G) réalisées vers les bords périphériques externes desdits talons (6, 7).

3. Ferrure selon la revendication 1 ou 2, **caractérisée en ce que** ses bords périphériques interne et externe sont biseautés par des chanfreins (16 et 17) réalisés en direction de sa face externe, de manière à définir, vue en plan, une face de contact (H) avec le sol, de largeur plus étroite que la face interne de ladite ferrure (1), mais sensiblement constante, au niveau de la pince (3) et des deux branches latérales (4 et 5) la prolongeant, ladite face de contact (H) s'élargissant au niveau des talons (6 et 7).

4. Ferrure selon l'une quelconque des revendications précédentes, **caractérisée en ce que** la face externe de chacun des quartiers (4, 5) présente dans sa face plane une pluralité de lumières ou étampures (8 à 11 et 12 à 15) destinée à recevoir les clous.

5. Ferrure selon la revendication 4, **caractérisée en ce que** les étampures sont disposées dans une rainure (20).

6. Ferrure selon l'une des revendications 3 à 5, **caractérisée en ce qu'**elle comporte de part et d'autre de la pince (3), dans des zones limitrophes avec les branches latérales (4, 5), des étampures (11, 15) s'étendant transversalement dans une zone médiane et dont la longueur est plus importante que l'épaisseur de la lame du clou correspondant, de manière à positionner celui-ci dans une zone idéale de clouage ou ligne blanche (LB) du sabot (2).

7. Ferrure selon la revendication 6, **caractérisée en ce que** chacune des étampures transversales (11, 15) est de forme tronc-pyramidale évasée vers la face externe de la pince (3).

8. Ferrure selon la revendication 7, **caractérisée en ce que** les faces internes des étampures transversales tronc-pyramidales (11 et 15) comportent des crans (21), afin de permettre le blocage de la tête du clou quelle que soit sa position dans l'étampure.

## Claims

1. Mechanical shoeing intended to be mounted more particularly on the hoof of a sport horse, of the type formed by a front central part (3) or toe piece, from both sides of which two side branches (4 and 5) or quarters extend freely, the rear end portions (6 and 7) of which form heels, holes (8, 9, 10, 11 and 12, 13, 14, 15) or nail holes being defined in the aforementioned side branches (4 and 5), in order to receive nails for fixing on the hoof (2), which shoeing, in plan view, includes on inner face facing the hoof (2), at the level of each of the side branches (4 and 5), zones (D and E) on the rear ends (6, 7) or heels, forming flares of greater width than the side branches (4, 5), the shoeing also comprising, in plan view, on the inner face, at the level of each of its side branches (4 and 5), a zone (A, B) whose interior edge presents a simple curved inner profile and whose width, obtained by a narrowing in width, is narrower than the zone (C) of the front central part (3) or toe piece, of greater width, the inner peripheral edge of the shoeing being bevelled by a chamfer (17) made in the direction of its outer face, so as to define, in plan view, a contact face (H) with the ground, having a width narrower than the inner face of said shoeing (1), said contact face (H) becoming wider at the level of the heels (6 and 7), **characterized in that** the front central portion (3) or toe piece has a plurality of ridges (18) forming accordion or grooves (19) disposed on the inner chamfer (17).

2. Shoeing according to claim 1, **characterized in that** the end portions (6, 7) or heels comprise, in an extension of their flared zones (D, E), new thinning zones (F, G) defined towards the outer peripheral edges of the aforesaid heels (6, 7).

3. Shoeing according to claim 1 or claim 2, **characterized in that** its inner and outer peripheral edges are bevelled by chamfers (16 and 17) made in the direction of its outer face, so as to define, in plan view, a contact face (H) with the ground, having a width narrower than the inner face of the aforementioned shoeing (1), but appreciably constant, on the level of the toe piece (3) and the two side branches (4 and 5) extending from it, the aforementioned contact face (H) becoming wider at the level of the heels (6 and 7).

4. Shoeing according to any one of the preceding claims, **characterized in that** the outer face of each quarters (4, 5) has a plurality of holes or nail holes (8 to 11 and 12 to 15) in its flat face intended to receive the nails.

5. Shoeing according to claim 4, **characterized in that** the nail holes are defined in a groove (20).

6. Shoeing according to one of claims 3 to 5, **characterized in that** it comprises on both sides of the toe piece (3), in zones bordering with the side branches (4, 5), nail holes (11, 15) extending transversely in a central zone and the length of which is greater than the thickness of the blade of the corresponding nail, so as to position this nail in an ideal nailing zone or white line (LB) of the hoof (2).

7. Shoeing according to claim 6, **characterized in that** each of the transverse nail holes (11, 15) is of truncated pyramidal form widening towards the outer face of the toe piece (3).

8. Shoeing according to claim 7, **characterized in that** the inner faces of the truncated pyramidal transverse nail holes (11 and 15) include notches (21), in order to allow the blocking of the nail head in any position in the nail hole.

## Patentansprüche

1. Mechanischer Beschlag, der dazu bestimmt ist, insbesondere an dem Huf eines Sportpferdes angebracht zu werden, des Typs, der durch einen vorderen zentralen Teil (3) oder Zehenteil gebildet ist, von dem sich beidseitig zwei Seitenarme (4 und 5) frei erstrecken, deren hintere Endteile (6 und 7) Absätze bilden, wobei Öffnungen (8, 9, 10, 11 und 12, 13, 14, 15) oder Nagellöcher an den genannten Seitenarmen (4 und 5) ausgebildet sind, um Befestigungsnägel an dem Huf (2) aufzunehmen, wobei der Beschlag in Draufsicht auf seiner zum Huf (2) weisenden Innenseite auf Höhe jedes seiner Seitenarme (4 und 5) Zonen (D und E) der hinteren Endteile (6, 7) oder Absätze aufweist, die Ausbreitungen mit größerer Breite als die Seitenarme (4, 5) bilden, wobei der Beschlag auch in Draufsicht auf seine Innenseite auf Höhe jedes seiner Seitenarme (4 und 5) eine Zone (A, B) aufweist, deren innere Linie ein Profil mit einfach gekrümmter Linie aufweist und deren Breite, die durch eine Verjüngung der Breite erhalten wird, in Bezug auf die breitere Zone (C) des vorderen zentralen Teils (3) oder Zehenteils kleiner ist, wobei ein innerer Umfangsrand des Beschlages durch eine Abschrägung (17) abgeschrägt ist, die in Richtung zu seiner Außenfläche verläuft, derart, um in Draufsicht eine Kontaktfläche (H) mit dem Boden zu bilden, mit einer schmaleren Breite als die der Innenseite des genannten Beschlages (1), wobei sich die genannte Kontaktfläche (H) auf Höhe der Absätze (6 und 7) verbreitert, **dadurch gekennzeichnet,**
**daß** der zentrale vordere Teil (3) oder Zehenteil eine Mehrzahl von Falten (18) aufweist, die einen Faltenbalg oder Rillen (19) bilden, die an der inneren Abschrägung (17) angeordnet sind.

2. Beschlag nach Anspruch 1, **dadurch gekennzeichnet, daß** seine äußeren Teile (6, 7) oder Absätze in Verlängerung ihrer Ausbreitungszonen (D, E) neue Verengungszonen (F, G) bilden, die in Richtung der äußeren Umfangsränder der genannten Absätze (6, 7) ausgebildet sind.

3. Beschlag nach den Ansprüchen 1 oder 2, **dadurch gekennzeichnet, daß** seine inneren und äußeren Umfangsränder durch Abschrägungen (16 und 17) abgeschrägt sind, die in Richtung zu seiner Außenfläche ausgebildet sind, derart, daß sie in Draufsicht eine Kontaktfläche (H) mit dem Boden bilden, mit größerer Breite als die Innenfläche des genannten Beschlages (1), jedoch im wesentlichen konstant im Bereich des Zehenteils (3) und von zwei Seitenarmen (4, 5), die ihn verlängern, wobei die genannte Kontaktfläche (H) sich im Bereich der Absätze (6 und 7) verbreitert.

4. Beschlag nach irgendeinem der vorhergehenden Ansprüche, **dadurch gekennzeichnet, daß** die Außenfläche jedes der Viertel (4, 5) in ihrer Ebene eine Vielzahl von Öffnungen oder Nagellöchern (8 bis 11 und 12 bis 15) aufweist, die zur Aufnahme der Nägel bestimmt sind.

5. Beschlag nach Anspruch 4, **dadurch gekennzeichnet, daß** die Nagellöcher in einer Rille (20) angeordnet sind.

6. Beschlag nach einem der Ansprüche 3 bis 5, **dadurch gekennzeichnet, daß** er beidseitig des Zehenteils (3) in Anrainerzonen mit den Seitenarmen (4, 5) Nagellöcher (11, 15) aufweist, die sich quer in einer mittleren Zone erstrecken und deren Länge wesentlich größer ist als die Dicke des Schaftes des entsprechenden Nagels, derart, um ihn in eine ideale Zone des Annagelns oder eine weiße Linie (LB) des Hufes (2) zu positionieren.

7. Beschlag nach Anspruch 6, **dadurch gekennzeichnet, daß** jedes der quer verlaufenden Nagellöcher (11, 15) pyramidenstumpfförmig in Richtung zur Außenseite des Zehenteils (3) ausgeweitet ist.

8. Beschlag nach Anspruch 7, **dadurch gekennzeichnet, daß** die Innenseiten der quer verlaufenden pyramidenstumpfförmigen Nagellöcher (11 und 15) Rasterungen (21) aufweisen, um das Blockieren des Kopfes des Nagels in seiner Position in dem Nagelloch zu gestatten.
